# NEUE EUROPÄISCHE PATENTSCHRIFT

(11) **EP 1 977 141 B2**
(45) Veröffentlichungstag und Bekanntmachung des Hinweises auf die Entscheidung über den Einspruch: **01.01.2014**
(45) Hinweis auf die Patenterteilung: 18.11.2009
(21) Anmeldenummer: 06846948.5
(22) Anmeldetag: 27.12.2006
(51) Int. Cl.: F16H 45/02

(54) **WANDLER MIT ZWANGS-ÖLFÜHRUNG**
CONVERTER WITH FORCED OIL SUPPLY
CONVERTISSEUR A GUIDAGE D'HUILE FORCE

(30) Priorität: 12.01.2006 US 758302 P; 21.11.2006 DE 102006055229
(43) Veröffentlichungstag der Anmeldung: 08.10.2008
(73) Patentinhaber: Schaeffler Technologies AG & Co. KG, 91074 Herzogenaurach (DE)
(72) Erfinder: MAIENSCHEIN, Stephan, 76534 Baden-Baden (DE); DEGLER, Mario, 76534 Baden-Baden (DE); MÜLLER, Bruno, 77880 Sasbach (DE); SCHENCK, Kai, Sebastian, 77654 Offenburg (DE)
(86) Internationale Anmeldenummer: PCT/DE2006/002317
(87) Internationale Veröffentlichungsnummer: WO 2007/079713

(56) Entgegenhaltungen:
- EP-A2- 1 843 062
- DE-A1- 10 104 346
- DE-A1- 10 117 746
- DE-A1- 10 314 325
- DE-A1- 10 350 935
- JP-A- 5 126 229
- JP-A- 2000 088 080
- US-A- 5 964 329

## Beschreibung

Die Erfindung betrifft einen Drehmomentwandler mit einer Überbrückungskupplung, wobei diese Überbrückungskupplung mit mindestens zwei axial verschiebbaren Lamellen ausgestattet ist. Außerdem ist der Drehmomentwandler mit einem Drei-Kanal-System ausgerüstet. Zur Optimierung des Ölflusses, und damit zur besseren Kühlung der Lamellen, sind Maßnahmen vorgesehen, die den Ölstrom über die Lamellen erzwingen.

Aus dem gattungsgemäßen der Technik ist die Schrift DE 103 50 935 A1 bekannt, in der beschrieben ist, dass durch entsprechende Maßnahmen der Ölfluss über die Lamellen einer Wandler-Überbrückungskupplung optimiert werden kann. Hierzu wird in einem Bereich, der fern der Überbrückung ist, der Durchfluss-Widerstand für das Öl erhöht. In einer zweiten, unabhängigen Maßnahme wird der Durchfluss-Widerstand für das Öl über die Überbrückungskupplung reduziert.

Es ist Aufgabe der Erfindung, den Ölfluss über die Reibflächen der Lamellen einer Überbrückungskupplung weiter zu verbessern.

Die Aufgabe wird durch den Gegenstand des Anspruchs 1 gelöst.

Ist bei der erfindungsgemäßen Ausgestaltung die Überbrückungskupplung offen, d.h. es erfolgt eine hohe Wärmeentwicklung durch die Torusströmung in der Pumpe, Turbine und Leitrad, so kann die Zirkulation zum und vom Wandler, im vollen Umfang stattfinden.

Ist die Überbrückungskupplung im Schlupfbetrieb, so entsteht die Wärme hauptsächlich an den Reibflächen der Lamellen. Durch die erfindungsgemäße Anordnung ist dann der Ölfluss optimal für die Kühlung der Lamellen ausgelegt..Mit anderen Worten: Die hier beschrieben Zwangführung des Öles stellt immer sicher, dass das Öl erst dann wieder das Wandler-Innere verlassen kann, wenn es seinen Weg über die Reiboberfläche der Lamellen genommen hat.

In einer Ausgestaltung der Erfindung ist auch der äußere Verzahnungsbereich am äußeren Lamellenträger an seinem der Turbine zugewandten Ende nicht verschlossen. Dafür ist aber in dem Bereich zwischen Kolben und der benachbarten Lamelle ein Dichtungselement angeordnet, welches den radialen Bereich vom Außendurchmesser der Lamelle, hin zu axialen Bohrungen durch die Lamellen, abdichtet.

Nachfolgend soll nun die Erfindung anhand der Figuren näher erläutet werden. Es zeigen:
- Figur 1: einen Halbschnitt durch einen nicht erfindungsgemäßen Drehmomentwandler, gemäß der ersten Lösung;
- Figur 2: einen Ausschnitt aus Figur 1 bei geöffneter Überbrückungskupplung;
- Figur 3: einen Ausschnitt aus Figur 1 bei geschlossener oder schlupfender Überbrückungskupplung;
- Figur 4: einen Halbschnitt durch einen erfindungsgemäßen Wandler;
- Figur 5: einen Ausschnitt aus der Figur 4;
- Figur 6: einen Halbschnitt gemäß eines weiteren Ausführungsbeispiels der Erfindung mit durchgängiger Zusatzwandung;
- Figur 7: gemäß Figur 6, jedoch mit einer Zusatzwand als Federelement;
- Figur 8: einen Halbschnitt gemäß der nach Fig 6 Lösung, jedoch mit zweiteiliger Zusatzwand.

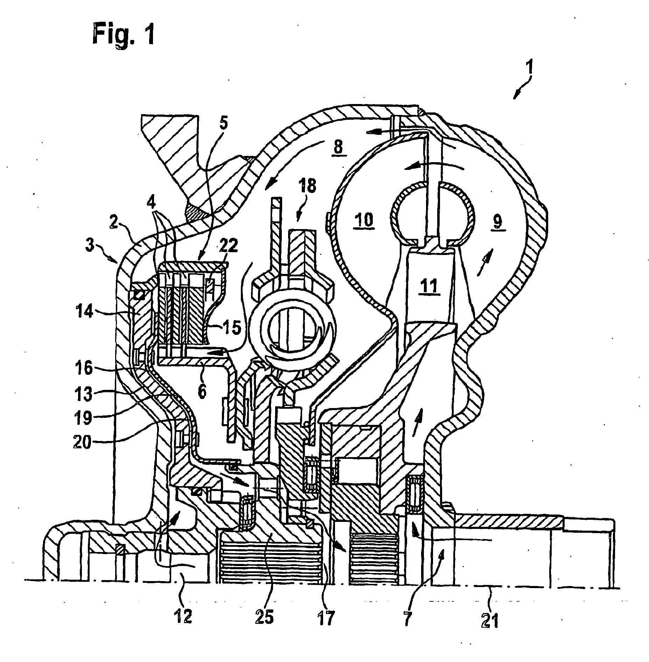

In der Figur 1 ist ein Drehmomentwandler 1 zu sehen, der sich um eine Rotationsachse 21 dreht. Der Wandler 1 weist in seinem Gehäuse 2 im Wesentlichen eine Pumpe 9, eine Turbine 10, ein Leitrad 11 und eine Überbrückungskupplung 3 auf. Im Kraftfluss zwischen der Überbrückungskupplung 3 und einer Nabe 25 ist auch ein Dämpfer 18 angeordnet. Die Getriebeeingangswelle und die Momentenabstützung für das Leitrad 11 wurden aus der Zeichnung herausgelassen.

Der Wandler verfügt über ein Drei-Kanal-System. D.h., dass insgesamt drei Kanäle vorhanden sind, um eine Ölzirkulation und das Steuern der Überbrückungskupplung 3 zu realisieren. Es wird hiermit vorausgestellt, dass der Ölstrom für die Zirkulation zwei Richtungen haben kann Die in der Figur 1 gezeigte Richtung ist also nur exemplarisch und nicht beschränkend zu verstehen. Aus einen ersten Kanal 7, der zwischen dem hülsenförmigen Fortsatz am rechten Ende des Wandlers zu sehen ist und der nicht dargestellten Momentenstütze für das Leitrad 11, fließt das Öl zunächst in die Pumpe 9. Ein Teil des Öles vollzieht dann eine Fortsetzung der Torusströmung in der Turbine1 0 und dem Leitrad 11. Der andere Teil des Öles tritt an dem Spalt zwischen Pumpe 9 und Turbine 10 aus und ergießt sich in den restlichen Bereich des ersten Raumes 8.

Ein weiterer, zweiter Kanal 12 des Wandlers 1, der aus der hohlen Getriebeeingangswelle (nicht gezeigt) herausführt, versorgt einen zweiten Raum 13. Wird dieser Raum 13 durch Öldruck beaufschlagt, so schließt die Überbrückungskupplung 3, indem ein Kolben 14 nach rechts herüber fährt und dabei Lamellen 4 gegen einen axialen Anschlag 22 presst. Ist der zweite Raum 13 jedoch drucklos oder nur gering mit Druck beaufschlagt, so presst der Öldruck aus dem ersten Raum 8 wieder auf.

Die Lamellen 4 greifen mit ihren Verzahnungen abwechselt in die Verzahnungen eines äußeren Lamellenträgers 5 oder eines inneren Lamellenträgers 6. Vorliegend ist an dem äußeren Lamellenträger 5, an seinem der Turbine 10 zugewandten Ende mit einem Dichtelement 15. versehen. Dieses Dichtelement 15 macht einen Ölfluss zwischen den Zähnen des äußeren Lamellenträgers 5 und den Zähnen der außen eingreifenden Lamellen 4 im Wesentlichen unmöglich, weil es sowohl auf dem stirnseitigen Rand des äußeren Lamellenträger dichtend, als auch auf der rechten Lamelle - der so genannten Endlamelle - aufliegt. Das Dichtelement 15 ist in dem Ausführuhgsbeispiel als ringförmige Feder ausgestaltet, es kann aber auch im Rahmen der Erfindung als Ringscheibe ausgebildet sein, wobei dann die Ringscheibe zugleich auch als axialer Anschlag 22 dienen kann. Das Dichtelement 15 kann mittels Schweißen oder Verstemmen (einer Art Nieten) an dem äußeren Lamellenträger 5, an dem Gehäuse 2 oder auch an einem Ausgangsteil eines radial außen angeordneten Dämpfers befestigt sein.

Zum Ausführungsbeispiel gehört aber auch noch ein dritter Kanal 17, der mit einem Raum 16 verbunden ist. Dieser Raum 16 wird beispielsweise gebildet, indem auf dem Kolben 14 mittels Distanzniete 24 eine Zusatzwandung 19 angeordnet wird. Der Spalt 20 zwischen dem Kolben 14 und der Zusatzwandung 19 hat auf dem der Turbine abgewandten Ende des äußeren Verzahnungsbereiches eine Öffnung, die das zirkulierende Öl aufnehmen kann. Da die Zusatzwandung gegenüber der Nabe 25 abdichtet, kann aus dem ersten Raum 8 kein Öl in den Rücklauf (= dritter Kanal) hineindrücken. Somit ist sichergestellt, dass im Wesentlichen das Öl nur über die Lamellen 4, bzw. über die Überbrückungskupplung 3 zirkulieren kann. Dadurch wird die Kühlung der Reibbeläge der Lamellen 4 optimiert.

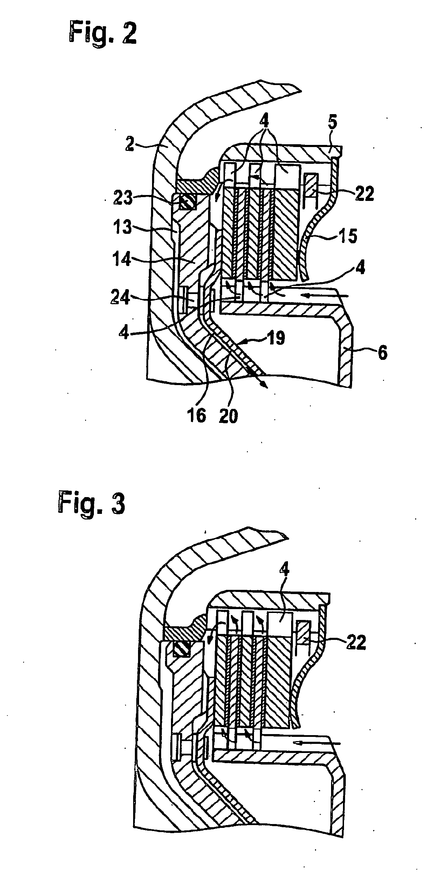

Mit den Figuren 2 und 3 wird der Ölfluss über die Lamellen 4 im Detail gezeigt. Man kann in der Figur 2 an dem Spalt zwischen dem axialen Anschlag 22 und der dazu benachbarten Lamelle 4 erkennen, dass hier die Überbrückungskupplung nicht geschlossen ist. Das Dichtelement 15 ist radial außen mit dem äußeren Lamellenträger 5 verstemmt. Das radial innere Ende des Dichtelementes 15 liegt federnd auf der Endlamelle auf und verhindert so das Einströmen des Öles im äußeren Verzahnungsbereich. Deshalb fließt das Öl über den inneren Verzahnungsbereich (also zwischen denn Zähnen des inneren Lamellenträgers und den radial innen verzahnten Lamellen 4). Da ein Abfließen des Öles nach links unten nicht möglich ist (siehe in der Figur 1 die Dichtstelle zwischen der Zusatzwandung 19 und der ringförmigen Anformung an der Nabe 25), kann das Öl nur radial nach außen fließen. Ist das Öl nach dem Überstreifen der Reibflächen der Lamellen 4 (die Reibfläche besitzen üblicherweise Ölnute) im äußeren Verzahnungsbereich angekommen, so kann es nur noch über die Öffnung zwischen dem Kolben und der Zusatzwandung 19 abfließen. Damit der Kolben 14 nicht die Öffnung zudrückt, ist der Kolben mit umfänglich sequentiellen "Nasen" 26 versehen. Die Nasen 26 stützen sich hierbei auf der Oberfläche der linken Lamelle 4 ab. In den Zwischenräumen zwischen den Nasen 26 kann das Öl ungestört abfließen.

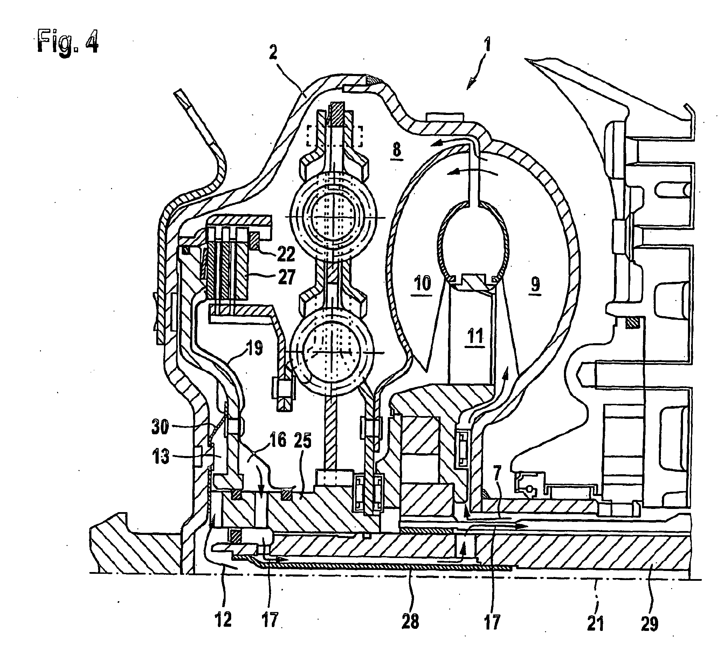

Die Figur 3 unterscheidet sich nur darin gegenüber der Figur 2, dass hier die Überbrückungskupplung 3 geschlossen ist. Dieses wird an dem fehlenden Spalt zwischen dem axialen Anschlag 22 und der benachbarten Lamelle 4 deutlich. Der Ölfluss erfolgt hier in seinem Verlauf genau so wie in der Figur 2, nur dass hier durch das Zusammenpressen der Lamellen 4, der Ölfluss - bei gleich bleibendem Druck in dem Raum 8 - reduziert ist. Dieses kann aber durch einen erhöhten Druck im Raum 8 während des Schlupfens kompensiert werden. Unabhängig von der erfinderischen Lösung in der Figur 4, ist gegenüber der Figur 1, eine andere Anordnung des Kolbens zu sehen. Bei der Figur 4 ist der Kolben 14 auf der Getriebeeingangswelle und nicht wie in der Figur 1, auf einer so genannten deckelfesten Nabe angeordnet. Die erfinderischen Lösungen sind aber nicht von diesen Ausgestaltungen abhängig.

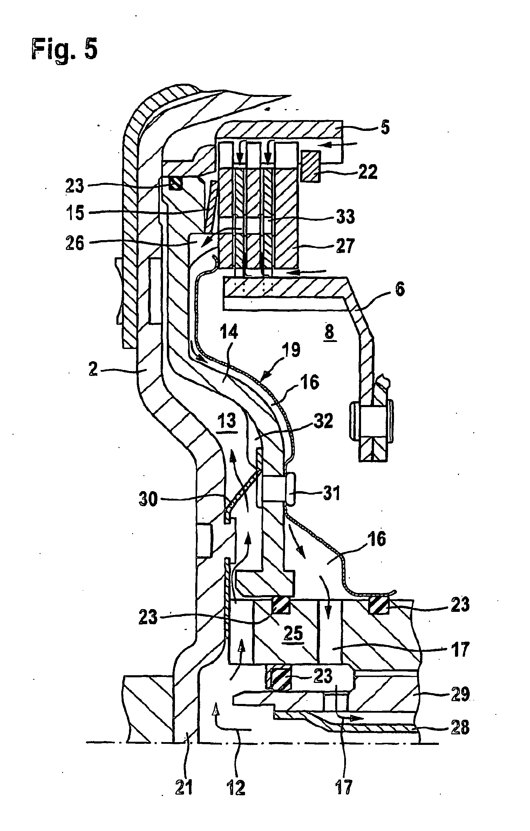

Die erfinderische Lösung, die mit den Figuren 4 und 5 gezeigt werden soll, besteht darin, dass nicht der äußere Verzahnungsbereich am äußeren Lamellenträger 5 abgedichtet wird, sondern dass der radial äußere Bereich der kolbennahen Lamelle gut abgedichtet wird, damit hier kein Öl zwischen der radial äußeren Lamellenoberfläche und der Ring-Nase des Kolben abströmen kann. Gleichzeitig sind aber die Lamellen mit mindestens einer axialen Bohrung 33 versehen. Strömt nun aufgrund der Druckunterschiede zwischen dem ersten Raum 8 und dem dritten Raum 16 Öl in den Verzahnungsbereich zwischen den Lamellen (4) und dem äußerem Lamellenträger 5 und/oder dem Lamellenträger 6, so kann das Öl nur in radialer Richtung in dem Spalt zwischen den Reibbelägen und den Oberflächen der reibbelagslosen Lamellen - mit oder auch ohne Hilfe von Ölnuten in den Reibbelägen bzw. den Stahllamellen - fließen. Ausdrücklich soll hier hervorgehoben werden, dass die Endlamelle 27, also die Lamelle, die der Turbine am nahesten ist, nicht durchbohrt ist, weil sonst - wie man aus den Figuren leicht entnehmen kann - kein Ölfluss über die Reibflächen der Lamellen entstehen würde.

Vorzugsweise im radial mittleren Bereich befinden sich in den Lamellen 4 Bohrungen 33. Hat das Öl nun in der oben beschriebenen Weise seinen Weg eingeschlagen und gelangt nun zu den Bohrungen, so das Öl dann axial in Richtung Kolben 14 fließen. Wie in der Figur 5 gut zu sehen ist, weist die ringförmige Nase 26 des Kolbens 14 Aussparungen auf, so dass das Öl in den dritten Raum 16 abfließen kann.

In den Figuren 4 und 5 ist auch eine Einschubhülse 28 zu sehen, die den dritten Kanal 17 um die Verzahnung zwischen der Nabe 25 mit der Getriebeeingangswelle 29 herumführen muss. Dieser Verzahnungsbereich ist sehr passgenau gefertigt, wodurch ein Öldurchfluss hier sehr erschwert wird. In der Figur 1 ist diese Einschubhülse nicht erforderlich, weil dort der Ölfluss radial außerhalb der Verzahnung Nabe/Getriebewetienach rechts - also Richtung Getriebe - geführt wird.

Es soll nicht unerwähnt bleiben, dass gemäß der Erfindung - dargestellt mit den Figuren 4 und 5 - der Ölfluss auch in umgekehrter Richtung fließen kann, ohne dass hier der erfindungsgemäße Gedanke verlassen wird.

In der Figur 5 wird auch noch ein weiterer erfinderischer Gedanke gut sichtbar: Hier ist eine Drehsicherung für den Kolben 14 zu sehen, die mit dem Gehäuse vernietet und radial außen mit Schlitzen versehen ist, wobei in diese Schlitze Stege 32 eingreifen. Vorzugsweise ist diese Drehsicherung 30 als Tellerfeder ausgestaltet. Im Rahmen dieser Erfindung könnte die Vernietung auch an dem Kolben und die Verbindung mittels Schlitzen und entsprechenden Stegen 32, auch an der Gehäusewandung 2 sein.

Die dargestellte Drehsicherung hat aber auch noch einen weiteren Vorteil: Durch ihre radiale Erstreckung hin zur Getriebeeingangswelle 29 dient die Drehsicherung 30 auch als Anlaufscheibe - also als axiale Gleitlagerung - zwischen Gehäuse 2 und Getriebeeingangswelle 29.

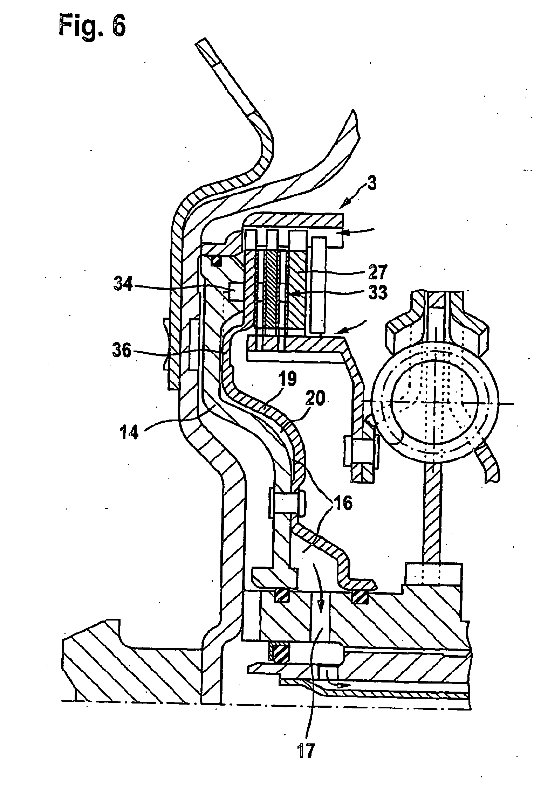

In der Figur 6 ist die Zusatzwand 19 wiederum dichtend mit den Lamellen verbunden. Die Besonderheit in dieser Ausgestaltung liegt aber hier darin, dass die Zusatzwand 19 sich bis in den äußeren Verzahnungsbereich der Überbrückungskupplung 3 erstreckt und zugleich flächig auf der benachbarten Lamelle aufliegt. Greift die Zusatzwand selber mit Zähnen in die Verzahnung des äußeren Lamellenträgers ein, so ist eine Drehsicherung 30 - wie in den Figuren 4 und 5 gezeigt - nicht erforderlich, da durch die Vernietung 31 der Zusatzwand 19 mit dem Kolben 14 auch der Kolben 14 drehgesichert ist.

Damit das Öl die Lamellen mittels der Bohrung 33 durchströmen kann, muss in dem Beispiel der Figur 6 auch die Zusatzwand 19 in dem Bereich eine Bohrung aufweisen. Um eine hydraulische Verbindung zum dritten Raum 16 herzustellen, weist der Kolben eine Ausnehmung 34 auf. Diese Ausnehmung 34 kann beispielsweise aus einer Sackbohrung und einer sich radial nach innen anschließenden Nut bestehen (wie in der Figur 6 gezeigt). Aber auch eine bogenförmige Nut ist hier denkbar.

Ferner ist der Figur 6 zur entnehmen, dass für eine elastische Nachgiebigkeit zwischen dem Lamellenpaket und der Kolbenstellung, zwischen dem radial äußeren und dem radial inneren Bereich der Zusatzwand 19 eine weiche Anbindungszone 36 gestaltet wurde. Dieses ist durch eine Reduzierung der Wandstärke in diesem Bereich erzielt worden.

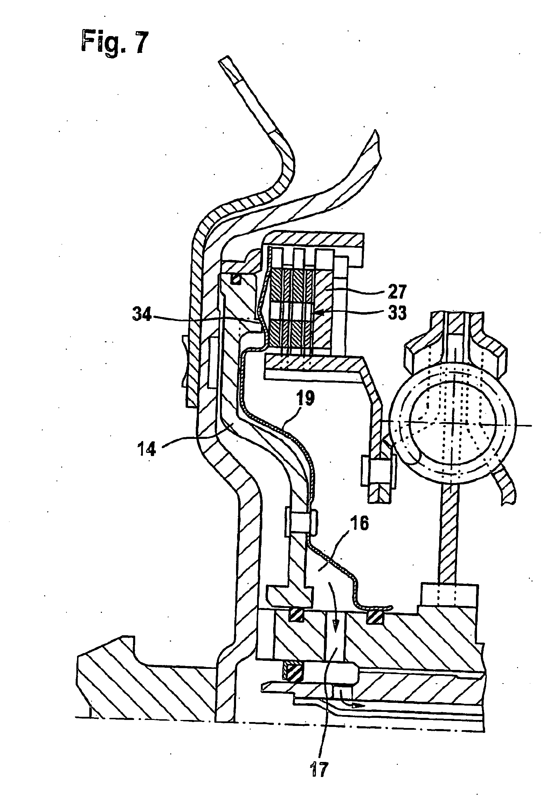

In der Figur 7 ist die Zusatzwand 19 als scheibenförmiges Federelement ausgebildet worden. Hierbei ist hervorzuheben, dass dieses Federelement die linke Lamelle sowohl radial außen, als auch radial innen durch Anlage abdichtet. Wegen der geringen Wandstärke der dort gezeigten Zusatzwand 19 in der Figur 7 ist nicht deutlich genug zu erkennen, dass auch hier eine Bohrung in der Zusatzwand 19 vorhanden ist, durch die das Öl in die Ausnehmung 34, und dann in den dritten Raum 16 weiter fließen kann.

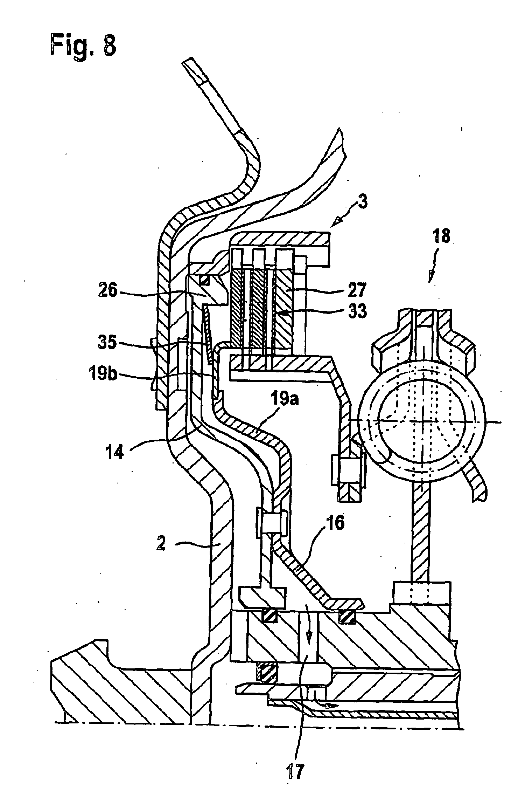

Die Figur 8 zeigt eine weitere Ausgestaltung der Zusatzwand 19, die zweiteilig ausgestaltet ist. Der radial innere Bereich 19a der Zusatzwand 19 ist mit einer dickeren Wandstärke versehen, als der radial äußere 19b. Der radial äußere Bereich 19b ist vorzugsweise elastisch ausgestaltet und wird auch noch mit einer Federkraft - vorzugsweise mit.einer Tellerfeder 35 - druckbeaufschlagt. Eine Tellerfeder 35 ist deshalb vorteilhaft, weil sie wegen ihrer teilweise radial geschlitzten Struktur das Öl durch ihre Schlitze in den dritten Raum 16 abfließen lässt.

Liegt bei dem Ausführungsbeispiel der Figur 8 der Kolben 14 mit seiner Nase 26 an der linken Lamelle an (d.h. die Überbrückungskupplung 3 ist zumindest teilweise betätigt), so durch die ebenfalls anliegende Zusatzwand 19b ein eindeutiger Abfluss des Öles definiert. Mit anderen Worten: das Öl kann nicht aus dem Raum 8 abfließen, ohne über die Reibflächen der Lamellen geflossen zu sein.

Damit das radial äußere 19b und das radial innere 19a Teilstück der Zusatzwand 19 - unabhängig von ihren momentanen axialen Stellungen - für ihre Funktion in ausreichender Weise verbunden bleiben, ist es vorteilhaft, wenn beide Teile - zumindest drehfest - miteinander verbunden werden. Dieses kann beispielsweise mittels einer Schrumpfverbindung, Vernieten oder auch Verstemmen geschehen. Die Dichtheit zwischen dem radial äußeren 19b und dem radial inneren 19a Teilstück der Zusatzwand 19 kann gewährleistet werden, indem beispielsweise das Teilstück 19b gegen einen Absatz des Teilstückes 19a gedrückt wird, wie es auch in der Figur 8 dargestellt ist.

Um unnötige Wiederholungen in den Figurenbeschreibungen zu vermeiden, wurden für gleiche Bauteile in den Zeichnungen auch gleiche Bezugszeichen verwendet.

### Bezugszeichenliste

- 1: Drehmomentwandler/Wandler
- 2: Wandler-Gehäuse.
- 3: Überbrückungskupplung
- 4: Lamelle
- 5: äußerer Lamellenträger
- 6: innerer Lamellenträger
- 7: erster Kanal
- 8: erster Raum
- 9: Pumpe
- 10: Turbine
- 11: Leitrad
- 12: zweiter Kanal
- 13: zweiter Raum
- 14: Kolben
- 15: Dichtelement
- 16: dritter Raum
- 17: dritter Kanal
- 18: Dämpfer
- 19: Zusatzwandung
- 20: Spalt
- 21: Rotationsachse
- 22: axialer Anschlag; Sicherungsring
- 23: Dichtung
- 24: Distanzniet
- 25: Nabe
- 26: Nase
- 27: Endlamelle
- 28: Einschubhülse
- 29: Getriebeeingangswelle
- 30: Drehsicherung des Kolbens
- 31: Niet
- 32: Steg
- 33: Bohrung34 Ausnehmung im Kolben
- 35: Tellerfeder
- 36: weiche Anbindungszone

## Patentansprüche

1. Drehmomentwandler (1), insbesondere für Kraftfahrzeuge, mit einem Drei-Kanal-Ölsystem und einer Überbrückungskupplung (3) mit den folgenden Merkmalen:
- die Überbrückungskupplung (3) weist mindestens zwei axial verschiebbare Lamellen (4) auf, wobei mindestens eine Lamelle (4) mit einem äußeren Lamellenträger (5) und mindestens eine andere Lamelle (4) mit einem inneren Lamellenträger (6) drehfest verbunden ist,
- ein erster Kanal (7) des Ölsystems ist mit einem ersten Raum (8) verbunden, der unter anderem die hydrodynamischen Komponenten des Wandlers (1) - wie Pumpe (9), Turbine (10) und Leitrad (11) - aufnimmt,
- ein zweiter Kanal (12) betätigt die Überbrückungskupplung (3), indem ein zweiter Raum (13) des Wandlers (1) mit Öldruck beaufschlagt und dadurch ein Kolben (14) gegen die Lamellen (4) gepresst wird,
**gekennzeichnet durch**
eine zum Kolben beabstandete Zusatzwandung (19) die auf der Seite des Kolbens (14) angebracht ist, die dem ersten Raum (8) zugewandt ist, wodurch ein Spalt (20) zwischen Kolben und Zusatzwandung (19) entsteht,
wobei die Zusatzwandung (19) im Wesentlichen öldicht an der dem Kolben (14) zugewandten Lamelle (4) anliegt und zugleich eine hydraulische Trennung zum ersten Raum (8) und zum zweiten Raum (13) herstellt,
wodurch ein dritter Raum (16) entsteht, und wobei der dritte Raum (16) im Wesentlichen öldicht mit einem dritten Kanal (17) verbunden ist und
die Lamellen (4) und die darauf angeordneten Reibbeläge - außer der Endlamelle (27) - mit mindestens einer axial orientierten Bohrung (33) versehen sind.

2. Wandler nach Anspruch 1, **dadurch gekennzeichnet, dass** von dem Öl zunächst der erste Raum (8) und dann erst der dritte Raum (16) durchströmt wird.

3. Wandler nach Anspruch 1, **dadurch gekennzeichnet, dass** von dem Öl zunächst der dritte Raum (16) und dann erst der erste Raum (8) durchströmt wird.

4. Wandler nach einem der Ansprüche 1 bis 3, **dadurch gekennzeichnet, dass** in dem ersten Raum (8) mindestens ein Dämpfer (18) angeordnet ist.

5. Wandler nach einem der Ansprüche 1 bis 4, **dadurch gekennzeichnet, dass** die Bohrung (33) im Wesentlichen auf dem mittleren Durchmesser der Reibbeläge angeordnet ist.

6. Wandler nach einem der Ansprüche 1 bis 5, **dadurch gekennzeichnet, dass** ein Dichtelement (15) zwischen der dem Kolben (14) zugewandeten Lamelle (4) und dem Kolben (14) derart angebracht ist, dass ein Ölfluss zwischen dem Kolben (14) und der dem Kolben (14) zugewandten Lamelle (4) im Bereich zwischen dem Außendurchmesser der Lamelle (4) und der Bohrung (33) zumindest reduziert wird.

7. Wandler nach Anspruch 6, **dadurch gekennzeichnet, dass** das Dichtelement (15) als Kegelscheibe ausgebildet ist.

8. Wandler nach einem der Ansprüche 1 bis 6, **dadurch gekennzeichnet, dass** die Zusatzwand (19) bis zum äußeren Verzahnungsbereich der Überbrückungskupplung (3) ausgeführt wird, die Bohrung (33) in diesem Bereich auch durch die Zusatzwand (19) hindurchgeht, wodurch das Öl über eine Ausnehmung (34) in dem Kolben (14) in den dritten Raum (16) abfließen kann.

9. Wandler nach Anspruch 8, **dadurch gekennzeichnet, dass** die Zusatzwand (19) als scheibenförmiges Federelement ausgebildet ist.

10. Wandler nach einem der Ansprüche 1 bis 9, **dadurch gekennzeichnet, dass** die Zusatzwand (19) aus zwei Teilkomponenten (19a, 19b) besteht.

## Claims

1. Torque converter (1), in particular for motor vehicles, having a three-channel oil system and having a bypass clutch (3), having the following features:
- the bypass clutch (3) has at least two axially movable plates (4), with at least one plate (4) being rotationally fixedly connected to an outer plate carrier (5) and with at least one other plate (4) being rotationally fixedly connected to an inner plate carrier (6),
- a first channel (7) of the oil system is connected to a chamber (8) which accommodates *inter alia* the hydrodynamic components of the converter (1) - such as pump (9), turbine (10) and guide wheel (11),
- a second channel (12) actuates the bypass clutch (3) by virtue of a second chamber (13) of the converter (1) being charged with oil pressure and a piston (14) thereby being pressed against the plates (4),
**characterized by** an auxiliary wall (19) which is spaced apart from the piston and which is attached to that side of the piston (14) which faces toward the first chamber (8), whereby a gap (20) is formed between the piston and the auxiliary wall (19), with the auxiliary wall (19) bearing in a substantially oil-tight fashion against that plate (4) which faces towards the piston (14) and simultaneously providing a hydraulic separation with respect to the first chamber (8) and with respect to the second chamber (13), as a result of which a third chamber (16) is formed, and with the third chamber (16) being connected in a substantially oil-tight fashion to a third channel (17), and the plates (4) and the friction linings which are arranged thereon are - with the exception of the end plate (27) - provided with at least one axially aligned bore (33).

2. Converter according to Claim 1, **characterized in that** the oil flows firstly through the first chamber (8) and only then through the third chamber (16).

3. Converter according to Claim 1, **characterized in that** the oil flows firstly through the third chamber (16) and only then through the first chamber (8).

4. Converter according to one of Claims 1 to 3, **characterized in that** at least one damper (18) is arranged in the first chamber (8).

5. Converter according to one of Claims 1 to 4, **characterized in that** the bore (33) is arranged substantially on the mean diameter of the friction linings.

6. Converter according to one of Claims 1 to 5, **characterized in that** a sealing element (15) is attached between that plate (4) which faces towards the piston (14) and the piston (14), in such a way that an oil flow between that plate (4) which faces towards the piston (14) and the piston (14) in the region between the outer diameter of the plate (4) and the bore (33) is at least reduced.

7. Converter according to Claim 6, **characterized in that** the sealing element (15) is designed as a conical disc.

8. Converter according to one of Claims 1 to 6, **characterized in that** the auxiliary wall (19) is formed as far as the outer toothing region of the bypass clutch (3), and in said region, the bore (33) also extends through the auxiliary wall (19), as a result of which the oil can flow out into the third chamber (16) via a recess (34) in the piston (14).

9. Converter according to Claim 8, **characterized in that** the auxiliary wall (19) is designed as a disc-shaped spring element.

10. Converter according to one of Claims 1 to 9, **characterized in that** the auxiliary wall (19) is composed of two sub-components (19a, 19b).

## Revendications

1. Convertisseur de couple (1), notamment pour véhicules automobiles, avec un système hydraulique à trois canaux et un embrayage de prise directe (3) présentant les caractéristiques suivantes :
- l'embrayage de prise directe (3) comporte au moins deux lamelles (4) mobiles dans le plan axial, au moins une lamelle (4) étant reliée fixement sans rotation à un porte-lamelles (5) extérieur et au moins une autre lamelle (4) étant reliée fixement sans rotation à un porte-lamelles (6) intérieur ;
un premier canal (7) du système hydraulique est relié à une première chambre (8) qui loge entre autres les composants hydrodynamiques du convertisseur (1) - tels que la pompe (9), la turbine (10) et le stator (11) ;
un deuxième canal (12) actionne l'embrayage de prise directe (3) en même temps qu'une deuxième chambre (13) du convertisseur (1) est chargée en pression hydraulique, comprimant ainsi un piston (14) contre les lamelles (4) ;
**caractérisé par** une paroi supplémentaire (19) située à une certaine distance du piston et disposée sur le côté du piston (14), ladite paroi étant orientée vers la première chambre (8), créant ainsi une fente (20) entre le piston et la paroi supplémentaire (19), la paroi supplémentaire (19) reposant pour l'essentiel de façon étanche sur le plan hydraulique contre la lamelle (4) orientée vers le piston (14) tout en établissant une séparation hydraulique avec la première chambre (8) et la deuxième chambre (13), créant ainsi une troisième chambre (16) et la troisième chambre (16) étant reliée pour l'essentiel de façon étanche sur le plan hydraulique à un troisième canal (17), et les lamelles (4) et les garnitures de friction posées dessus sont pourvues - en dehors de la lamelle d'extrémité (27) - d'au moins un alésage (33) à orientation axiale.

2. Convertisseur selon la revendication 1, **caractérisé en ce que** l'huile traverse d'abord la première chambre (8) puis la troisième chambre (16).

3. Convertisseur selon la revendication 1, **caractérisé en ce que** l'huile traverse d'abord la troisième chambre (16) puis la première chambre (8).

4. Convertisseur selon l'une quelconque des revendications 1 à 3, **caractérisé en ce qu'**au moins un amortisseur (18) est disposé dans la première chambre (8).

5. Convertisseur selon l'une quelconque des revendications 1 à 4, **caractérisé en ce que** l'alésage (33) est disposé pour l'essentiel sur le diamètre central des garnitures de friction.

6. Convertisseur selon l'une quelconque des revendications 1 à 5, **caractérisé en ce qu'**un élément étanche (15) est disposé de telle sorte entre la lamelle (4) orientée vers le piston (14) et le piston (14) qu'un écoulement d'huile est réduit au moins entre le piston (14) et la lamelle (4) orientée vers le piston (14) dans la zone située entre le diamètre extérieur de la lamelle (4) et l'alésage (33).

7. Convertisseur selon la revendication 6, **caractérisé en ce que** l'élément étanche (15) prend la forme d'un disque conique.

8. Convertisseur selon l'une quelconque des revendications 1 à 6, **caractérisé en ce que** la paroi supplémentaire (19) est sortie jusqu'à la zone d'endentement extérieure de l'embrayage de prise directe (3), que l'alésage (33) traverse également la paroi supplémentaire (19) dans cette zone, amenant l'huile à pouvoir s'écouler dans le piston (14) dans la troisième chambre (16) via un évidement (34).

9. Convertisseur selon la revendication 8, **caractérisé en ce que** la paroi supplémentaire (19) prend la forme d'un élément de ressort en forme de disque.

10. Convertisseur selon l'une quelconque des revendications 1 à 9, **caractérisé en ce que** la paroi supplémentaire (19) se compose de deux parties (19a, 19b).
